# FASCICULE DE BREVET EUROPEEN

(11) **EP 2 903 848 B1**
(45) Date de publication et mention de la délivrance du brevet: **23.08.2017**
(21) Numéro de dépôt: 13782799.4
(22) Date de dépôt: 04.10.2013
(51) Int. Cl.: B60K 15/03, B64D 37/32

(54) **RESERVOIR RESISTANT AUX SURPRESSIONS PROVOQUEES PAR UN IMPACT DE PROJECTILE**
GEGEN DURCH PROJEKTILEINSCHLÄGE ERZEUGTE ÜBERDRÜCKE BESTÄNDIGER TANK
TANK RESISTANT TO THE OVERPRESSURES CAUSED BY PROJECTILE IMPACT

(30) Priorité: 04.10.2012 FR 1259425
(43) Date de publication de la demande: 12.08.2015
(73) Titulaire: Airbus Group SAS, 75016 Paris (FR)
(72) Inventeur: THEVENET, Pascal, F-77210 Avon (FR)
(74) Mandataire: Ipside
(86) Numéro de dépôt international: PCT/FR2013/052364
(87) Numéro de publication internationale: WO 2014/053787

(56) Documents cités:
- US-A- 3 506 224
- US-A- 3 567 536
- US-A- 3 698 587
- US-A- 3 787 279

## Description

La présente invention concerne le domaine des réservoirs de liquide, comme par exemple du carburant, et plus particulièrement un réservoir comportant un dispositif permettant de gérer la surpression générée par un projectile traversant un réservoir rempli de liquide.

Le problème, lorsque le liquide d'un réservoir souple ou intégré dans une structure, comme par exemple un aéronef ou un véhicule terrestre, est traversé par un projectile, est celui de la surpression qui est générée. Cette surpression au sein du liquide peut amener la destruction du réservoir par éclatement.

En effet, le projectile déplace sur sa trajectoire un volume de liquide qui, par nature, est en général incompressible.

Dans les réservoirs actuels, il n'y a pas d'expansion possible du volume enfermant le liquide, lors de la traversée du liquide par un projectile, ce qui fait qu'une pression s'applique de manière croissante sur les parois du réservoir jusqu'à la rupture des parois du réservoir. Plus précisément, l'interaction entre le projectile et le fluide produit pour le premier une perte d'énergie cinétique et, pour le second, un déplacement croissant qui, s'il n'est pas compensé, va engendrer cette élévation de pression. L'onde de pression résultant va ensuite frapper la paroi du réservoir de carburant sur une zone relativement grande et, en fonction de l'amplitude de cette onde et la construction du réservoir de carburant, peut rompre la paroi du réservoir.

Actuellement aucun réservoir ne permet de gérer totalement cette pression de volume. Le risque de perdre un aéronef ou un véhicule par explosion du réservoir après un impact balistique est donc très important.

Certains réservoirs souples, en particulier ceux dotés d'une double paroi enserrant une mousse avec une fonction auto-obturation après perforation, par exemple dans le cas de certains aéronefs militaires, peuvent éventuellement limiter les effets de tirs de balles. Cependant une telle mousse est loin de convenir pour absorber la surpression générée par la pénétration du projectile.

Diverses techniques connues peuvent répondre plus ou moins à l'objectif de réduction de vulnérabilité d'un réservoir face à une menace balistique. Ces techniques visant à réduire les effets de surpression sont les suivantes :
- imbrication de deux réservoirs (également appelé « tank in tank » selon la terminologie anglaise), celui à l'intérieur du plus grand devant rompre sous l'impact balistique et vider son contenu dans l'autre,
- utilisation d'un revêtement de caoutchouc à l'intérieur du réservoir (également appelé « rubber layers around tank » selon la terminologie anglaise), permettant de découpler le fluide de la structure formant le réservoir,
- utilisation d'un revêtement de caoutchouc renforcé de fibres à l'intérieur du réservoir, qui est un dérivé du précédent concept,
- utilisation d'un réservoir souple en Kevlar rempli de mousse à cellules ouvertes (également appelé « foam in bladder tank » selon la terminologie anglaise).
- utilisation d'un réservoir souple à parois gonflables (également appelé « nitrogen inflated ballistic bladder » system selon la terminologie anglaise), décrit dans le brevet US 4925057,
- utilisation de renforts ondulés en fibres de verre/résine collés entre le réservoir à parois rigides et la structure contenant ce dernier (reprenant un principe décrit dans les brevets US 4469295 et US 7566489) et pouvant se déformer sous l'effet de surpression,
- utilisation d'une couche sacrificielle (également appelé « sacrificial layer » selon la terminologie anglaise) tapissant l'intérieur du réservoir, faite de pains de nids d'abeilles recouverts d'une peau en fibres de verre/résine (pour l'étanchéité des alvéoles), pouvant s'écraser sous l'effet de surpression.

Cependant ces réservoirs ne sont pas adaptés à de fortes pressions et de plus ne permettent pas de limiter les dommages causés par plusieurs impacts successifs ou simultanés de projectiles.

Il est également connu par le brevet EP 2048079 un ensemble de réservoirs de carburant et un procédé correspondant permettant de limiter les dommages que pourrait occasionner l'impact d'un projectile balistique, notamment les dommages du type orifice favorisant une fuite de carburant. Ce brevet décrit un double réservoir formé par deux vessies imbriquées et capable ainsi de limiter les dommages occasionnés par un impact balistique. L'ensemble comprend également une pluralité de connecteurs disposés entre les deux vessies afin d'au moins partiellement limiter l'expansion de la vessie. Ainsi, cet ensemble permet de limiter l'expansion de la vessie interne, mais ne permet pas d'empêcher l'explosion du réservoir si la pression exercée par l'expansion de volume du carburant lors de la pénétration du projectile est trop importante.

Enfin, il est connu un produit à base de mousse polyuréthane protégeant les réservoirs de carburant uniquement contre les effets électrostatique et le ballotement, tout en assurant l'inertage des vapeurs et une barrière contre les débris externes. Ce système ne permet pas de gérer les surpressions générées par un impact balistique. US 3567536 décrit un réservoir selon le préambule de la revendication 1. La présente invention a donc pour objet de pallier un ou plusieurs des inconvénients de l'art antérieur en proposant un réservoir adapté pour résister aux surpressions générées par un impact de projectile.

Plus précisément, la présente invention propose un dispositif de gestion des surpressions au sein d'un réservoir de liquide

Pour cela, la présente invention propose un réservoir, de liquide, adapté pour résister aux suppressions provoquées par un impact de projectile et disposé dans une structure, ledit réservoir comportant un dispositif de gestion des surpressions.

L'amélioration porte donc sur l'expansion du volume enfermant le liquide au travers d'un dispositif mécanique adapté très simple.

Le but de l'invention est d'obtenir une expansion de manière simple, durable et passive, aussi bien pour des réservoirs existants que pour de nouveaux réservoirs à concevoir. Par durable il faut entendre l'aptitude à obtenir des expansions successives si plusieurs projectiles traversent le réservoir au fil du temps. Autrement dit, le dispositif mécanique ne doit pas être un consommable.

Selon l'invention, le dispositif de gestion des surpressions comprend une couche de mousse hyperélastique. On entend par mousse hyperélastique une mousse capable de se comprimer fortement sous chargement et de reprendre sa forme initiale après déchargement. Il s'agit de préférence d'une mousse à base de polyéthylène.

Selon un mode de réalisation de l'invention, le dispositif est disposé à l'intérieur du réservoir, notamment lorsque le réservoir est partie intégrante d'une structure comme, par exemple, une voilure ou un fuselage.

Selon un mode de réalisation de l'invention, le dispositif est disposé à l'extérieur du réservoir, entre la paroi externe souple du réservoir et la structure contenant ce dernier.

Selon un mode de réalisation de l'invention, l'épaisseur de la couche de mousse hyperélastique est adaptée en fonction du volume d'expansion souhaité.

Selon l'invention, l'épaisseur de la couche de mousse hyperélastique est comprise entre 5 et 15 mm.

Selon un mode de réalisation de l'invention, le dispositif recouvre au moins quatre faces du réservoir lorsque le réservoir a une forme parallélépipédique.

Selon l'invention, la mousse hyperélastique est à cellules fermées.

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique d'une vue en coupe d'une partie d'une variante du réservoir selon un mode de réalisation de l'invention,
- la figure 2 est une représentation schématique d'une vue en coupe médiane d'une variante du réservoir selon un mode de réalisation de l'invention l'invention,
- la figure 3 illustre les résultats (force globale de réactions des quatre parois en fonction du temps) obtenus pour un réservoir selon l'art antérieur a) entièrement rempli, b) rempli à 90%,
- la figure 4 illustre les résultats (force globale de réactions des quatre parois en fonction du temps) obtenus pour un réservoir selon l'invention a) entièrement rempli, b) rempli à 90%.

La présente invention concerne un dispositif entièrement mécanique, passif, simple permettant d'obtenir l'expansion d'un réservoir enfermant un liquide.

Dans le cadre de l'invention le réservoir est par exemple un réservoir souple ou un réservoir intégré. On entend par réservoir souple, un réservoir formé par une enveloppe qui n'est pas la structure dans laquelle il est disposé. On entend par réservoir intégré, un réservoir formé par la structure dans laquelle il est disposé.

Le liquide présent dans le réservoir est par exemple du carburant.

Les parois du réservoir définissent le volume de stockage de liquide. Le réservoir est disposé dans une structure, et par exemple dans une structure de type aéronef. Le réservoir peut également être disposé dans une structure de type véhicule terrestre ou tout autre type de structure comportant un réservoir pouvant être rempli de liquide.

Le dispositif utilisé pour contrer les effets dus à la traversée d'un projectile dans le liquide, est constitué d'une couche de mousse. La mousse utilisée dans le cadre de la présente invention a un comportement mécanique de type hyperélastique. En effet, il est important que le dispositif permette de gérer l'augmentation de pression due à la pénétration d'un projectile dans le réservoir, mais permette également de gérer des augmentations de pression successives ou simultanées. Pour cela, il est nécessaire que la mousse, après avoir été comprimée sous l'effet de la surpression, reprenne rapidement sa forme initiale. De plus, la rigidité de compression de la couche de mousse doit être telle qu'elle doit solliciter faiblement la structure qui la supporte, que l'on soit en présence ou non d'un réservoir rapporté.

On entend par mousse hyperélastique une mousse capable de se comprimer fortement sous chargement et de reprendre sa forme initiale après déchargement. Une mousse polyéthylène comme l'Ethafoam® 900, dont les propriétés sont précisées dans le tableau 1, présente un tel comportement. D'autres références de mousses hyperélastiques peuvent être utilisées.

**Tableau 1 : propriétés de la mousse hyperélastique.**

| Propriétés physiques | Valeurs |
|---|---|
| Densité | 140 kg*m³ |
| Déformation rémanente après compression | <5% |
| Niveau de compression : | Niveau de contrainte |
| 10% | 400 kPa |
| 25% | 500 kPa |
| 50% | 700 kPa |

La solution proposée dans le cadre de la présente invention se rapproche ainsi de celle dite « couche sacrificielle » mais en utilisant un matériau au comportement mécanique adapté.

En fonction du type de réservoir utilisé, le dispositif selon l'invention va être disposé dans le réservoir dit intégré ou à l'extérieur du réservoir à parois souples.

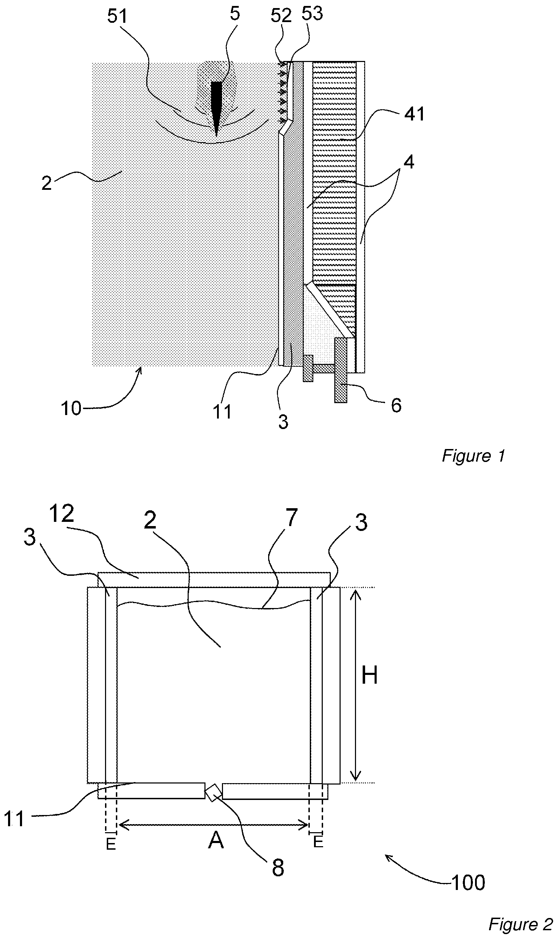

Plus précisément, selon une variante de l'invention illustrée sur la figure 1, dans le cas d'un réservoir souple, le dispositif est placé entre la structure et la paroi externe dudit réservoir. Dans cette variante, le liquide 2 est stocké dans le volume interne du réservoir 10. Le projectile 5 en pénétrant dans le réservoir 10 crée des ondes 51 qui vont exercer une surpression 52 et déformer la paroi 53 du réservoir 10. Cette déformation est amortie par la couche de mousse 3 disposée entre la structure 4 et le réservoir 10.

Selon un mode de réalisation, la structure est composée de deux peaux en composite entre lesquelles est disposée par exemple une couche de matériau 41 en nid d'abeille. La couche de mousse est intercalée entre la paroi du réservoir souple et le panneau sandwich ainsi construit. La tenue mécanique de cette structure 4 est supérieure à la tenue mécanique de la mousse. Le panneau sandwich peut comporter un support 6 de fixation.

Dans ce type de variante, c'est-à-dire un réservoir 10 souple logé dans le fuselage ou la voilure, une mousse à cellules ouvertes ou fermées peut être utilisée. En effet, le liquide n'est pas directement en contact avec la mousse, il n'est donc pas nécessaire qu'elle soit à cellules fermées.

Selon une autre variante de l'invention illustrée sur la figure 2, dans le cas d'un réservoir 100 intégré, c'est-à-dire formé par la structure de l'aéronef, la mousse 3 tapisse la paroi interne 11 dudit réservoir 100 sur au moins 4 faces. Dans cette variante, les parois 12 du réservoir peuvent être formées directement par la structure, par exemple, de l'aéronef. Le projectile 8 est représenté dans une paroi, en phase de perforation. Le niveau de liquide dans le réservoir 100 est illustré par la ligne 7.

Dans ce type de variante, c'est-à-dire dans le cas d'un réservoir 100 intégré par exemple en fuselage ou voilure, la mousse au contact direct du carburant est préférentiellement à cellules fermées pour éviter toute migration de liquide dans les cellules.

Dans les deux types de variantes, réservoir souple ou intégré, lorsque le réservoir est de forme parallélépipédique, et par exemple cubique ou rectangulaire, la mousse est de préférence disposée sur au moins quatre faces parallèles à la trajectoire du projectile. Selon un mode réalisation, la mousse tapisse l'intégralité des faces du réservoir.

Selon un mode de réalisation, la couche de mousse hyperélastique a une épaisseur comprise entre 5 et 15 mm, et de préférence égale à 10 mm.

Selon une variante de l'invention la mousse utilisée peut être à base de polyéthylène (PE) à cellules fermées, comme celle présentée sous le nom commercial Ethafoam® 900.

Selon, une variante de l'invention, un tel dispositif peut être utilisé par les concepteurs de réservoirs souples, et par exemple pour des réservoirs à double paroi dotés à l'origine d'une mousse ayant principalement la fonction d'auto-obturation, par réaction chimique avec le carburant, en cas de perforation. L'ajout de la mousse entre deux parois d'élastomère permet en plus de gérer la surpression due à la pénétration d'un projectile.

Il peut être envisagé une mise à jour des réservoirs existants, mais aussi la conception de nouveaux réservoirs intégrés incorporant le dispositif selon l'invention.

Dans tous ces types d'applications, le fait d'utiliser une mousse au comportement hyperélastique permet de garantir un usage efficace sur la durée.

En effet, dans le cas, par exemple, d'un aéronef militaire, la menace balistique n'est pas unique, plusieurs projectiles peuvent atteindre et traverser le réservoir successivement et/ou simultanément. Des expansions multiples et successives du volume enfermant le carburant sont donc nécessaires. Une mousse hyperélastique permet ainsi de répondre à ce type d'exigences et ainsi de limiter le risque de perdre l'aéronef par explosion du réservoir non équipé de cette couche de mousse, après un impact balistique.

### Exemple de mise en oeuvre de l'invention

La solution proposée est mise en oeuvre au travers de simulations numériques afin de montrer le bénéfice apporté par une mousse hyperélastique.

L'exemple concerne un réservoir cubique (illustré sur la figure 2, vue en coupe médiane) de dimensions 200 mm (H) x 200 mm (A) x 200 mm selon deux configurations :
- entièrement rempli,
- rempli à 90 %.

Toutes les parois sont supposées infiniment rigides et quatre d'entre elles en périphérie supportent une couche de mousse :
- soit en polyuréthane (PU) rigide,
- soit en polyéthylène (PE) type Ethafoam® 900 selon l'invention.

Dans les deux cas, l'épaisseur de la mousse est de 10 mm. Un projectile cubique de 8 mm arrive à la vitesse initiale de 250 m/s dans le domaine liquide.

Au cours des simulations est relevé, pour chaque paroi rigide supportant une couche de mousse, l'effort global de réaction en fonction du temps.

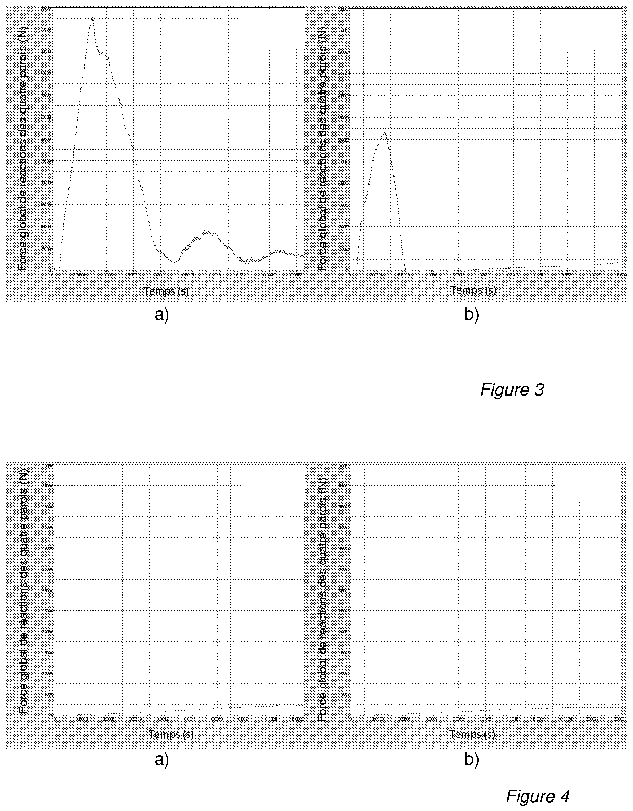

La figure 3a illustre les résultats obtenus en présence d'un réservoir entièrement rempli et doté d'une mousse rigide en PU, le pic d'effort atteint environ 57800 N, soit une pression moyenne supérieure à 14 bars. Lorsque le réservoir, toujours doté de la même mousse, est rempli à 90% (figure 3b), le pic d'effort est ramené à environ 31800 N, soit une pression moyenne proche de 9 bars.

La figure 4a illustre les résultats obtenus en présence d'un réservoir entièrement rempli et doté d'une mousse en PE type Ethafoam® 900 avec un remplissage à 100 %, l'effort maximal est d'environ 2430 N, soit une pression moyenne d'environ 0,6 bar. Le réservoir, toujours doté de la même mousse, est rempli à 90% (figure 4b), l'effort de réaction reste inférieur à 1800 N, soit une pression moyenne inférieure à 0,5 bar.

Ces résultats de simulations sont significatifs car on observe une réduction de la surpression de 95% pour un réservoir rempli à 100 % ou 90 % et doté de mousse PE hyperélastique. La performance de la mousse PE hyperélastique comme l'Ethafoam® 900, est largement supérieure à ce que l'on peut obtenir avec une mousse PU rigide.

## Revendications

1. Réservoir (10, 100) de liquide (2), adapté pour résister aux suppressions provoquées par un impact de projectile et disposé dans une structure (4), ledit réservoir comportant un dispositif de gestion des surpressions, ledit dispositif comprenant une couche (3) de mousse hyperélastique à base de polyéthylène, **caractérisé en ce que** l'épaisseur de la couche de mousse hyperélastique est comprise entre 5 et 15 mm et la mousse hyperélastique à base de polyéthylène est à cellules fermées

2. Réservoir selon la revendication 1, dans lequel le dispositif (3) est disposé à l'intérieur du réservoir (10, 100).

3. Réservoir selon la revendication 1, dans lequel le dispositif (3) est disposé à l'extérieur du réservoir, entre la paroi externe du réservoir (10, 100) et la structure (4).

4. Réservoir selon une des revendications 1 à 3, dans lequel l'épaisseur de la couche de mousse hyperélastique est adaptée en fonction du volume d'expansion souhaité.

5. Réservoir selon une des revendications 1 à 4, ledit réservoir ayant une forme parallélépipédique et le dispositif (3) recouvrant au moins quatre faces dudit réservoir.

## Patentansprüche

1. Tank (10, 100) für Flüssigkeit (2), welcher eingerichtet ist, gegen durch einen Einschlag eines Projektils erzeugte Überdrücke beständig zu sein, und in einer Struktur (4) angeordnet ist, wobei der Tank eine Überdrucksteuervorrichtung umfasst, wobei die Vorrichtung eine Schicht (3) aus hyperelastischem Schaum auf der Basis von Polyethylen umfasst, **dadurch gekennzeichnet, dass** die Dicke der Schicht aus hyperelastischem Schaum zwischen 5 und 15 mm liegt und der hyperelastische Schaum auf der Basis von Polyethylen geschlossene Zellen aufweist.

2. Tank nach Anspruch 1, wobei die Vorrichtung (3) im Inneren des Tanks (10, 100) angeordnet ist.

3. Tank nach Anspruch 1, wobei die Vorrichtung (3) außerhalb des Tanks, zwischen der Außenwand des Tanks (10, 100) und der Struktur (4), angeordnet ist.

4. Tank nach einem der Ansprüche 1 bis 3, wobei die Dicke der Schicht aus hyperelastischem Schaum als Funktion des gewünschten Expansionsvolumens eingerichtet ist.

5. Tank nach einem der Ansprüche 1 bis 4, wobei der Tank die Form eines Parallelepipeds hat und die Vorrichtung (3) mindestens vier Flächen des Tanks bedeckt.

## Claims

1. Tank (10, 100) for liquid (2), suitable for withstanding overpressures caused by a projectile impact and positioned in a structure (4), said tank comprising an overpressure management device, said device comprising a layer (3) of polyethylene-based hyperelastic foam, **characterized in that** the thickness of the hyperelastic foam layer is between 5 and 15 mm and the polyethylene-based hyperelastic foam is a closed-cell foam.

2. Tank according to Claim 1, wherein the device (3) is positioned inside the tank (10, 100).

3. Tank according to Claim 1, wherein the device (3) is positioned outside of the tank, between the outer wall of the tank (10, 100) and the structure (4).

4. Tank according to one of Claims 1 to 3, wherein the thickness of the hyperelastic foam layer is adjusted as a function of the desired expansion volume.

5. Tank according to one of Claims 1 to 4, said tank having a parallelepipedal shape and the device (3) covering at least four sides of said tank.
